# EUROPEAN PATENT APPLICATION

(11) **EP 4 682 416 A1**
(43) Date of publication of application: **21.01.2026**
(21) Application number: 24203446.0
(22) Date of filing: 30.09.2024
(51) Int. Cl.: F16L 3/10, F16L 3/13, F16L 3/223, F16L 3/237

(54) **PIPE CLAMP HOLDER**

(30) Priority: 19.07.2024 CN 202410972377
(71) Applicant: Ningbo Aier Ventilation Equipment Co., Ltd., Yuyao Zhejiang 315400 (CN)
(72) Inventor: LU, Haojun, Yuyao, 315400 (CN); LUO, Xiaoxi, Guiyang, 550000 (CN)
(74) Representative: Metida

(57) **Abstract**

The present invention discloses a pipe clamp holder, belonging to the technical field of pipe clamp holders, including a base, at least one pipe clamp buckle, and at least one soft rubber plug. The base is provided with at least one clearance hole, both the pipe clamp buckle and the soft rubber plug are clamped into the base. The pipe clamp buckle and the soft rubber plug are both extended to the clearance hole; the pipe clamp buck and the soft rubber plug correspond to the clearance hole one-to-one. The present invention provides the clearance hole on the base for a pipeline to pass through, the pipe clamp buckle is clamped into the base so as to provide a positioning support for the pipeline. At the same time, the soft rubber plug elastically limits the pipeline, thereby satisfying a clamping of the pipeline and facilitating a quick positioning of the pipeline by the pipe clamp holder.

## Description

### TECHNICAL FIELD

The present disclosure relates to the field of pipe clamp holder technologies, and in particular, to a pipe clamp holder.

### BACKGROUND

Pipe clamp is a standard component for fixing pipelines, consisting of a base plate, a cover plate, a pipe clamp body, and a bolt combination.

At present, a bolt fastener is required for a pipe clamp holder, which makes an operation of the pipe clamp holder inconvenient, and different specifications of pipes require different specifications of pipe clamp holders, resulting in poor universality of the pipe clamp holder.

### SUMMARY

A purpose of the present invention is to propose a pipe clamp holder to solve the above-mentioned problems.

In order to achieve the above objectives, the present invention adopts the following technical solution: a pipe clamp holder, including a base, at least one pipe clamp buckle, and at least one soft rubber plug; the base is provided with at least one clearance hole; both the pipe clamp buckle and the soft rubber plug are clamped into the base; the pipe clamp buckle and the soft rubber plug are both extended to the clearance hole; the pipe clamp buckle and the soft rubber plug correspond to the clearance hole one-to-one.

As a further description of the above technical solution: the base includes an upper cover and a lower shell; both ends of the lower shell are provided with a circular hole position; both ends of the upper cover are provided with a circular buckle corresponding to the circular hole position; the circular buckle is clamped into the circular hole position; the lower shell is provided with a clamp groove hole corresponding to the pipe clamp buckle; the pipe clamp buckle is a semi-circular tube; a side wall of the pipe clamp buckle is provided with an elastic hook, the elastic hook is clamped into the clamp groove hole; two edges of the pipe clamp buckle are provided with two symmetrical C-shaped buckles, a first positioning groove is formed between the two symmetrical C-shaped buckles, and a second positioning groove is formed in each C-shaped buckle; the soft rubber plug is clamped on the upper cover, and the soft rubber plug is extended to the first positioning groove and the second positioning groove.

As a further description of the above technical solution: the elastic hook is provided with a plurality of side wall protrusions; an inner wall of the clamp groove hole is provided with a plurality of side wall depressions; the side wall protrusions are clamped into the side wall depressions.

As a further description of the above technical solution: the first positioning groove and the second positioning groove are both circular grooves; a diameter of the first positioning groove is larger than that of the second positioning groove.

As a further description of the above technical solution: opposite two ends of the upper cover are both provided with an elastic arm; the circular buckle is provided on the elastic arm.

As a further description of the above technical solution: a positioning seat is provided on the upper cover, a square opening on the soft rubber plug is clamped on the positioning seat, an arc-shaped protrusion of the soft rubber plug is extended into the first positioning groove and the second positioning groove.

In a summary, due to the adoption of the above technical solution, the beneficial effects of the present invention are:
1. In the present invention, the clearance hole for a pipeline to pass through is provided on the base, the pipe clamp buckle is clamped into the base so as to provide a positioning support for the pipeline. At the same time, the soft rubber plug elastically limits the pipeline, thereby satisfying a clamping of the pipeline and facilitating a quick positioning of the pipeline by the pipe clamp holder.
2. In the present invention, by simultaneously pressing the elastic arms at both ends of the upper cover, the circular buckle can be detached from the circular hole position, and the upper cover and lower shell can be separated to achieve a fully open state. If the elastic arm at one end of the upper cover is pressed, the circular buckle on this elastic arm will be detached from the circular hole position, and the circular buckle at the other end will play a role as a connecting pin in the circular hole position, so that the upper cover can be rotated along the lower shell to achieve a semi open state.
3. In the present invention, both the first positioning groove and the second positioning groove are circular hole grooves, and the diameter of the first positioning groove is larger than that of the second positioning groove. By aligning the first positioning groove or the second positioning groove with the clearance hole, pipes with different diameters can be positioned, thereby improving a versatility of the pipe clamp holder.

### BRIEF DESCRIPTION OF DRAWINGS

FIG. 1 is a schematic diagram of an overall structure of a pipe clamp holder.
FIG. 2 is a first exploded view of the pipe clamp holder.
FIG. 3 is a second exploded view of the pipe clamp holder.
FIG. 4 is a use state reference diagram of the pipe clamp holder.
FIG. 5 is a front view of the pipe clamp holder.

Numeral reference: 1. base; 11. upper cover; 12. lower shell; 2. pipe clamp buckle; 3. soft rubber plug; 4. clearance hole; 5. circular hole position; 6. circular buckle; 7. clamp groove hole; 8. elastic hook; 9. C-shaped buckle; 10. first positioning groove; 13. second positioning groove; 14. side wall protrusion; 15. side wall depression; 16. elastic arm; 17. positioning seat; 18. arc-shaped protrusion.

### DESCRIPTION OF EMBODIMENTS

Below, the technical solutions in the embodiments of the present invention will be clearly and completely described in combination with the accompanying drawings. Obviously, the described embodiments are only a part of the embodiments of the present invention, not all of them. Based on the embodiments of the present invention, all other embodiments obtained by those skilled in the art without creative work are within the protection scope of the present invention.

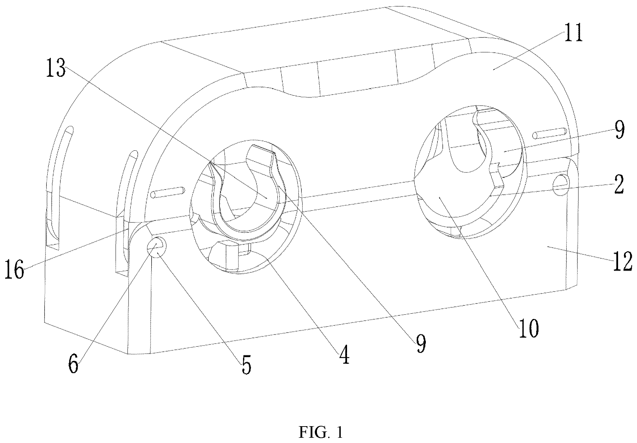

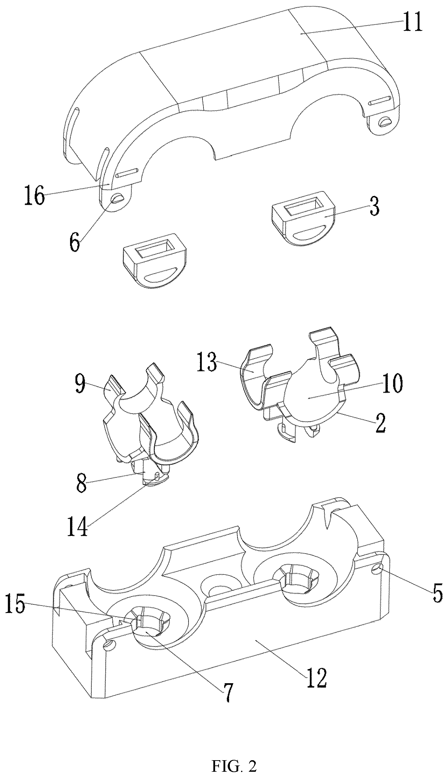

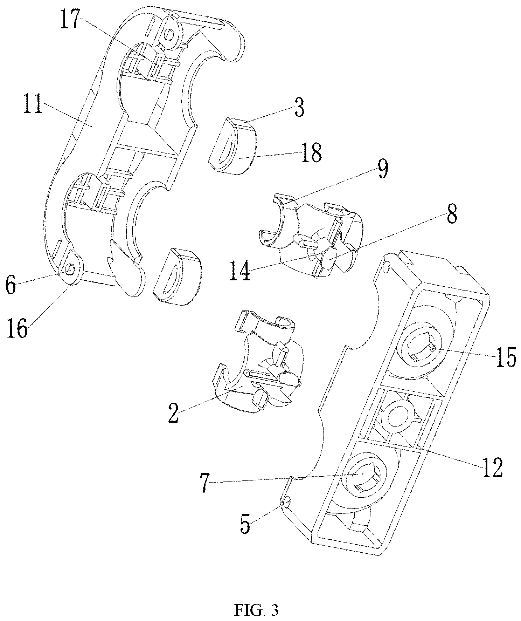

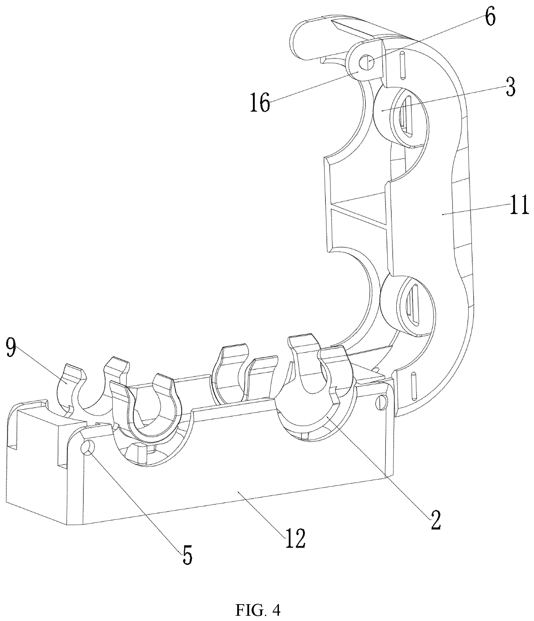

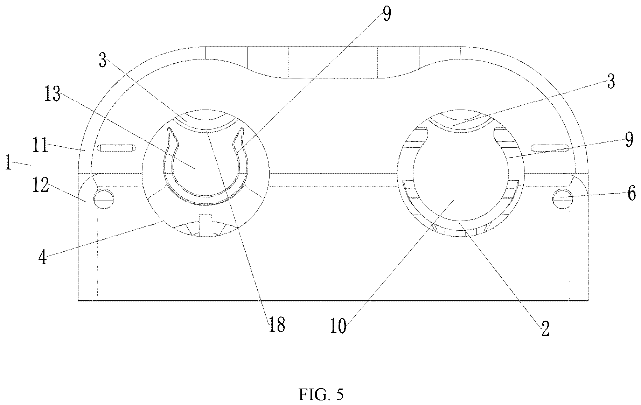

Please refer to FIGs. 1-5. The present invention provides a technical solution: a pipe clamp holder, including a base 1, at least one pipe clamp buckle 2, and at least one soft rubber plug 3. The base 1 is provided with at least one clearance hole 4, both the pipe clamp buckle 2 and the soft rubber plug 3 are clamped into the base 1; both the pipe clamp buckle 2 and the soft rubber plug 3 are extended to the clearance hole 4. The pipe clamp buckle 2 and the soft rubber plug 3 correspond to the clearance hole 4 one-to-one.

The base 1 includes an upper cover 11 and a lower shell 12, both ends of the lower shell 12 are provided with a circular hole position 5, both ends of the upper cover 11 are provided with a circular buckle 6 corresponding to the circular hole position 5. The circular buckle 6 is clamped into the circular hole position 5, and the lower shell 12 is provided with a clamp groove hole 7 corresponding to the pipe clamp buckle 2, the pipe clamp buckle 2 is a semi-circular tube. A side wall of the pipe clamp buckle 2 is provided with an elastic hook 8, the elastic hook 8 is clamped to the clamp groove hole 7. Two edges of the pipe clamp buckle 2 are provided with two symmetrical slots. A first positioning groove 10 is formed between the two C-shaped buckles 9. A second positioning groove 13 is formed in each C-shaped buckle 9. The soft rubber plug 3 is clamped on the upper cover 11 and is extended into the first positioning groove 10 and the second positioning groove 13.

The elastic hook 8 is provided with a plurality of side wall protrusions 14, an inner wall of the clamp groove hole 7 is provided with a plurality of side wall depressions 15. The side wall protrusions 14 are clamped to the side wall depressions 15, thereby limiting a freedom of the pipe clamp buckle 2 in a rotation direction and facilitating a stable installation of the pipe clamp buckle 2.

The first positioning groove 10 and the second positioning groove 13 are both circular hole grooves. A diameter of the first positioning groove 10 is larger than that of the second positioning groove 13. By aligning the first positioning groove 10 or the second positioning groove 13 with the clearance hole 4, pipes with different diameters can be positioned, thereby improving a versatility of the pipe clamp holder.

Opposite two ends of the upper cover 11 are provided with an elastic arm 16, and the circular buckle 6 is provided on the elastic arm 16. At the same time, the elastic arms 16 at both ends of the upper cover 11 are pressed, the circular buckle 6 is caused to be detached from the circular hole position 5, thereby separating the upper cover 11 and the lower shell 12 and achieving a fully open state. If the elastic arm 16 at one end of the upper cover 11 is pressed, the circular buckle 6 on this elastic arm 16 is detached from the circular hole position 5, and the circular buckle 6 at the other end will act as a connecting pin in the circular hole position 5, so that the upper cover 11 can rotate along the lower shell 12 to achieve a semi open state.

The upper cover 11 is provided with a positioning seat 17, a square opening on the soft rubber plug 3 is clamped on the positioning seat 17. The arc-shaped protrusion 18 of the soft rubber plug 3 is extended to the first positioning groove 10 and the second positioning groove 13, thereby facilitating an assembly installation of the soft rubber plug 3 on the upper cover 11. The arc-shaped protrusion 18 is convenient for abutting against a pipe wall.

Working principle: firstly, based on the diameter of the pipeline, whether the first positioning groove 10 or the second positioning groove 13 is chosen to align with the positioning hole, the first positioning groove 10 or the second positioning groove 13 is aligned with the clearance hole 4 so as to position the pipelines with different diameters, improving the versatility of the pipe clamp holder. At this time, the elastic hook 8 is clamped into the clamp groove hole 7, and the side wall protrusions 14 are clamped into the side wall depressions 15, thereby limiting a freedom of the pipe clamp buckle 2 in the rotation direction and facilitating the stable installation of the pipe clamp buckle 2. Secondly, the pipeline is clamped into the first positioning groove 10 or the second positioning groove 13. At this time, the arc-shaped protrusion 18 of the soft rubber plug 3 abuts against the pipe wall. Finally, the limiting on the pipeline is released, the elastic arms 16 at both ends of the upper cover 11 are simultaneously pressed to render the circular buckle 6 to be separated from the circular hole position 5, thereby separating the upper cover 11 from the lower shell 12 and achieving a fully open state. If the elastic arm 16 on one end of the upper cover 11 is pressed, the circular buckle 6 on this elastic arm 16 is detached from the circular hole position 5, and the circular buckle 6 on the other end will act as a connecting pin in the circular hole position 5, allowing the upper cover 11 to rotate along the lower shell 12 and achieve a semi open state.

The above description is only referred specific embodiments of the present invention, but the protection scope of the present invention is not limited to this. Any skilled person familiar with the technical field should be included in the protection scope of the present invention by equivalent substitution or modification based on the technical solution and inventive concept disclosed in the present invention.

## Claims

1. A pipe clamp holder, **characterized in that** it comprises a base (1), at least one pipe clamp buckle (2), and at least one soft rubber plug (3); the base (1) is provided with at least one clearance hole (4); both the pipe clamp buckle (2) and the soft rubber plug (3) are clamped into the base (1); the pipe clamp buckle (2) and the soft rubber plug (3) are both extended to the clearance hole (4); the pipe clamp buckle (2) and the soft rubber plug (3) correspond to the clearance hole (4) one-to-one.

2. The pipe clamp holder according to claim 1, **characterized in that** the base (1) comprises an upper cover (11) and a lower shell (12); both ends of the lower shell (12) are provided with a circular hole position (5); both ends of the upper cover (11) are provided with a circular buckle (6) corresponding to the circular hole position (5);
the circular buckle (6) is clamped into the circular hole position (5); the lower shell (12) is provided with a clamp groove hole (7) corresponding to the pipe clamp buckle (2); the pipe clamp buckle (2) is a semi-circular tube; a side wall of the pipe clamp buckle (2) is provided with an elastic hook (8), the elastic hook (8) is clamped into the clamp groove hole (7);
two edges of the pipe clamp buckle (2) are provided with two symmetrical C-shaped buckles (9), a first positioning groove (10) is formed between the two symmetrical C-shaped buckles (9), and a second positioning groove (13) is formed in each C-shaped buckle (9);
the soft rubber plug (3) is clamped on the upper cover (11), and the soft rubber plug (3) is extended to the first positioning groove (10) and the second positioning groove (13).

3. The pipe clamp holder according to claim 2, **characterized in that** the elastic hook (8) is provided with a plurality of side wall protrusions (14); an inner wall of the clamp groove hole (7) is provided with a plurality of side wall depressions (15); the side wall protrusions (14) are clamped into the side wall depressions (15).

4. The pipe clamp holder according to claim 3, **characterized in that** the first positioning groove (10) and the second positioning groove (13) are both circular grooves; a diameter of the first positioning groove (10) is larger than that of the second positioning groove (13).

5. The pipe clamp holder according to claim 4, **characterized in that** opposite two ends of the upper cover (11) are both provided with an elastic arm (16); the circular buckle (6) is provided on the elastic arm (16).

6. The pipe clamp holder according to claim 5, **characterized in that** a positioning seat (17) is provided on the upper cover (11), a square opening on the soft rubber plug (3) is clamped on the positioning seat (17), an arc-shaped protrusion (18) of the soft rubber plug (3) is extended into the first positioning groove (10) and the second positioning groove (13).
